# FASCICULE DE BREVET EUROPEEN

(11) **EP 2 749 350 B1**
(45) Date de publication et mention de la délivrance du brevet: **27.02.2019**
(21) Numéro de dépôt: 13306812.2
(22) Date de dépôt: 20.12.2013
(51) Int. Cl.: B01J 20/18, B01J 20/32, C09K 3/18, E01C 11/24, C09K 17/40, E01C 13/02, E01C 13/08, B01J 20/28

(54) **Composition destinée à réguler la présence d'eau sur une surface extérieure**
Zusammensetzung, die zur Regulierung der Präsenz von Wasser auf einer Außenfläche dienen soll
Composition intended for controlling the presence of water on an outer surface

(30) Priorité: 28.12.2012 FR 1262909
(43) Date de publication de la demande: 02.07.2014
(73) Titulaire: Pintat, Benoit, 68340 Zellenberg (FR)
(72) Inventeur: Pintat, Benoit, 68340 Zellenberg (FR)
(74) Mandataire: Nuss, Laurent

(56) Documents cités:
- JP-A- 2001 192 302
- JP-B2- 3 891 576
- US-A- 4 372 876
- US-A- 4 386 012
- US-A- 4 431 456

## Description

La présente invention se rapporte au domaine des compositions permettant une optimisation de la résistance de surfaces extérieures soumises à de fortes chaleurs et des intempéries récurrentes.

Sur les terrains de sport, les surfaces extérieures sont soumises à des contraintes d'intempéries et de variations de température qui conduisent à une dégradation plus rapide de la surface voire à un problème d'entretien et de maintien de ces surfaces extérieures dans des conditions optimales pour être utilisées.

Deux inconvénients majeurs surviennent généralement, l'un en période froide et l'autre en période chaude.

En période froide, lorsque ces surfaces extérieures sont humides, l'apparition du gel rend ces surfaces dures et glissantes et donc dangereuses pour leur utilisation. De même, ce gel peut être un frein à une évacuation de l'humidité par un système de drainage associé. Actuellement, pour palier ces difficultés, des dispositifs de chauffage sont aménagés en vue de limiter le risque de gel de ces terrains artificiels et de faciliter l'élimination de l'humidité de ces surfaces. Cependant, de tels dispositifs ont cet inconvénient d'imposer un coût supplémentaire lors de la construction et de l'installation de la surface du terrain et une consommation d'énergie importante.

En période chaude, lorsque ces surfaces extérieures sont soumises à de fortes chaleurs, leurs températures peuvent atteindre près de 70°C, quand bien même la température de l'air est de 34°C, rendant l'utilisation de ces surfaces extrêmement difficile. C'est pourquoi il est courant de rafraichir ces surfaces, terre battue, pelouse, pelouse artificielle, par des arrosages réguliers pour limiter une élévation trop importante de la température de la surface et la maintenir dans un intervalle optimal pour être utilisé.

La présente invention a pour but de pallier ces inconvénients en proposant une composition permettant à différents types de surfaces extérieures d'optimiser leur utilisation dans le cadre d'intempéries et de températures importantes.

L'invention a ainsi pour objet une composition épandable pour surface extérieure destinée à réguler la présence d'eau sur cette surface par adsorption et désorption de l'eau, caractérisée en ce que cette composition comprend un mélange de granulés d'un minéral microporeux formé par une zéolithe et d'un sel formé par un ou plusieurs cations inorganiques issus du groupe des métaux alcalins ou des métaux alcalino-terreux et/ou par un ou plusieurs anions inorganiques issus d'un groupe comprenant des hydroxydes, des chlorures et des sulfates et/ou formé par un ou de plusieurs groupes organiques comprenant des acides dicarboxiliques, des acides formiques et des acides acétiques pour permettre un effet d'adsorption et/ou de désorption, cette composition comprenant un enrobage au moins partiel par un film perméable de la zéolithe, ce film perméable étant réalisé par de l'amidon, de la dextrine ou de la colophane, et en ce que la zéolithe présente une granulométrie comprise entre 0,5 et 1,5 mm, et en ce que le film perméable d'enrobage a une épaisseur d'au plus 500 microns.

L'invention porte également sur des utilisations adaptées d'une composition selon l'invention pour des surfaces extérieures particulières.

L'invention concerne aussi un procédé de production d'une composition selon l'invention, caractérisé en ce que le procédé comprend le mélange de la zéolithe et d'un sel avec au moins :
- une étape d'ajout d'une quantité déterminée de solvant,
- une étape de dilution du sel dans le solvant pour l'obtention d'une solution saline,
- une étape d'adsorption et/ou d'absorption de la solution saline par la zéolithe,
- une étape d'élimination du solvant adsorbé et/ou absorbé laissant la zéolithe chargé en sel,
- une étape d'enrobage au moins partiellement de la zéolithe chargé en sel par un film perméable.

L'invention concerne encore une composition pour renouveler l'adsorption de sel par la zéolithe d'une composition pour surface extérieure selon l'invention, caractérisée en ce que cette composition comprend une quantité d'élément d'enrobage d'au plus 70% de la masse totale de la composition et une quantité de sel d'au plus 30% de la masse totale de la composition.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

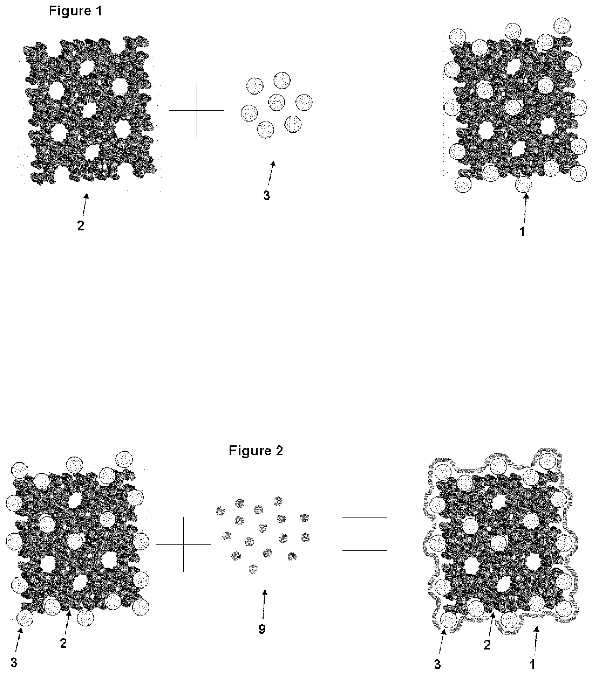

- la figure 1 est une représentation schématique d'un granulé de minéral microporeux intégrant un sel,
- la figure 2 est une représentation schématique d'un granulé de minéral microporeux intégrant un sel et enrobé d'un film perméable,

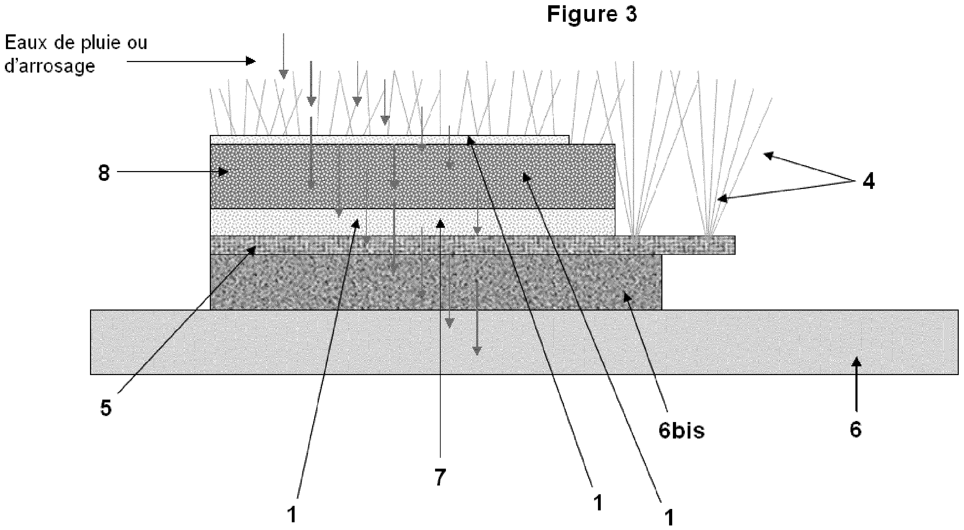

- la figure 3 est une coupe transversale d'un exemple de pelouse artificielle et de son système de drainage.

Dans le présent document, l'expression « surface extérieure » désigne une surface susceptible de supporter des contraintes liées à l'humidité, aux intempéries, au froid ou aux fortes chaleurs estivales. Cette surface ou terrain peut être une voie routière, un trottoir, des marches d'escaliers, une place de stationnement ou encore un terrain de sport, comme par exemple, un gazon naturel, une pelouse synthétique, une surface de terre battue ou une carrière hippique.

La présente invention se rapporte à une composition 1 épandable pour surface extérieure destinée à réguler la présence d'eau sur cette surface par adsorption et désorption de l'eau, caractérisée en ce que cette composition 1 comprend un mélange de granulés d'un minéral microporeux formé par une zéolithe 2 et d'un sel 3 formé par un ou plusieurs cations inorganiques issus du groupe des métaux alcalins ou des métaux alcalino-terreux et/ou par un ou plusieurs anions inorganiques issus d'un groupe comprenant des hydroxydes, des chlorures et des sulfates et/ou formé par un ou de plusieurs groupes organiques comprenant des acides dicarboxiliques, des acides formiques et des acides acétiques pour permettre un effet d'adsorption et/ou de désorption, cette composition 1 comprenant un enrobage au moins partiel par un film perméable 9 de la zéolithe 2, ce film perméable 9 étant réalisé par de l'amidon, de la dextrine ou de la colophane, et en ce que la zéolithe 2 présente une granulométrie comprise entre 0,5 et 1,5 mm, et en ce que le film perméable 9 d'enrobage a une épaisseur d'au plus 500 microns.

Selon la particularité de réalisation de l'invention, le minéral microporeux est une zéolithe 2 qui peut être une chabazite et/ou une clinoptinolithe. De même, il convient de comprendre que la zéolithe 2 utilisée dans le cadre de l'invention est une zéolithe 2 qui peut être naturelle ou obtenue par synthèse.

Selon un mode de réalisation préféré de l'invention, le sel 3 du mélange est intégré dans le minéral microporeux 2, de sorte que ce minéral se trouve chargé ioniquement par le sel 3 du mélange. Cette intégration comprend également un enrobage du minéral microporeux 2 avec un chargement ionique de sa surface extérieure. Il convient de noter que, bien que le sel 3 utilisé soit classiquement du NaCl, il peut être remplacé par tout sel susceptible de présenter des propriétés équivalentes. Ainsi, ce sel peut être formé par un ou plusieurs cations inorganiques issus du groupe des métaux alcalins ou des métaux alcalino-terreux et/ou par un ou plusieurs anions inorganiques issus d'un groupe comprenant au moins des hydroxydes, des chlorures et des sulfates. Alternativement, le sel peut être organique et composé à partir d'un ou de plusieurs sels issus d'un groupe comprenant au moins des acides dicarboxiliques, des acides formiques et des acides acétiques.

Cette intégration du sel dans le minéral microporeux 2 permet d'opérer une synergie entre, d'une part, les propriétés d'adsorption, d'absorption et de restitution progressive du minéral microporeux 2 et, d'autre part, les propriétés d'abaissement de la température de solidification de l'eau. En effet, en présence d'humidité, le minéral microporeux 2 est en mesure d'adsorber et/ou d'absorber cette humidité pour empêcher, en cas de température négative, d'une part, la formation en surface d'une couche de gel glissante et, d'autre part, l'agglomération des éléments du substrat.

Le risque de formation d'une couche de gel est également réduit grâce à la libération progressive, en présence d'humidité, du sel intégré dans le minéral microporeux 2. La libération du sel 3 par le minéral microporeux 2 en présence d'humidité permet la formation d'une solution saline dont la température de solidification est plus basse que celle de l'eau. Cette solution saline présentant un risque de solidification plus réduit lors d'une baisse de température, elle peut alors être évacuée plus facilement par un système de drainage 6, 6bis approprié.

Une autre propriété, également complémentaire, du minéral microporeux 2 est son incompressibilité. Cette propriété permet de limiter le risque d'agrégation de granulés de ce minéral microporeux 2 lors de températures négatives. Ainsi, l'incompressibilité de granulats de ce minéral 2 garantit la présence d'interstices entre ces granulats et assure la présence et le maintien d'espaces autorisant un écoulement et une évacuation d'eau, d'humidité ou d'eau salinisée. Une telle propriété ne pourrait pas être exploitée avec certains autres minéraux tels que du sable seul qui présente l'inconvénient de s'agréger plus facilement en présence de gel et supprime la possibilité d'évacuation de l'humidité vers un système de drainage 6, 6bis sous la surface du terrain.

Dans le cadre d'une utilisation du minéral microporeux 2 sur des surfaces extérieures soumises à de fortes chaleurs, le minéral microporeux 2 chargé en sel 3 et en eau permet une libération progressive de l'eau et le maintien d'une humidité relative sur la surface de ce terrain. Ainsi, sur une surface soumise à de fortes chaleurs, lorsque celle-ci est rafraichie par arrosage, le minéral microporeux 2 chargé en sel adsorbe et/ou absorbe l'eau puis libère progressivement ces molécules d'eau par désorption. Cette libération progressive de l'eau par le minéral microporeux 2 évite une évaporation de l'eau rapidement après l'arrosage de la surface et permet de maintenir une température plus basse au niveau de la surface du terrain par rapport à la température ambiante. Ce minéral microporeux 2 chargé en sel 3 permet ainsi de réduire la quantité d'arrosage nécessaire habituellement pour rafraichir une surface de terrain.

Selon une particularité de réalisation, cette composition 1 est caractérisée en ce que la quantité de sel est au moins supérieure à 10% de la masse totale de la composition. Cette quantité est au moins préférentiellement comprise entre 10% et 70% de la masse totale de la composition et idéalement comprise entre 10% et 50% de la masse totale de la composition. Il convient de comprendre que la quantité de sel 3 intégrée à la zéolithe 2 est augmentée pour améliorer l'efficacité de la composition de l'invention.

Selon une particularité de réalisation préférée mais non limitative de l'invention, la composition selon l'invention est caractérisée en ce que la quantité de minéral microporeux 2 correspond à 50% de la masse totale de la composition 1.

Une telle composition associant une zéolithe 2 avec un sel 3 permet également, à températures équivalentes, de restreindre la quantité de sel 3 classiquement nécessaire pour lutter contre l'apparition et la formation de gel, et donc restreint les désagréments liés à un usage important de sel.

La spécificité de l'enrobage du minéral microporeux 2 par un film perméable 9 a pour objet de ralentir la libération du sel 3 par le minéral 2 tout en permettant une adsorption et/ou absorption de molécule d'eau au travers du film 9 d'enrobage. Cet arrangement permet également de réguler le phénomène de désorption et la libération de molécules d'eau adsorbées et/ou absorbées par le minéral 2.

Selon une spécifité de réalisation non-limitative de l'invention, le film perméable 9 peut également être chargé en sel 3. Un tel arrangement permet alors, d'une part, de faciliter l'adsorption et/ou l'absorption de molécule d'eau et d'optimiser le ralentissement du phénomène de désorption et, d'autre part, de limiter la perte de charge en sel 3 du minéral microporeux 2 après plusieurs opérations d'adsorption et/ou d'absorption et de désorption.

Selon un mode de réalisation préféré mais non-limitatif de la composition 1 de l'invention, le film d'enrobage 9 est réalisé par un oligomère et/ou polymère naturelle ou synthétique. Selon une particularité de ce mode de réalisation préféré, le polymère servant au film d'enrobage 9 est réalisé par au moins un composé d'une liste comprenant notamment au moins l'amidon, la dextrine et la colophane.

Selon une particularité de réalisation de l'invention, l'enrobage du minéral microporeux 2 est opéré par un film perméable 9 dont l'épaisseur est préférentiellement dans un intervalle compris entre 5 et 200 microns, idéalement dans un intervalle compris entre 10 et 150 microns.

La perméabilité de l'enrobage à l'eau diffère selon le type de composé d'enrobage utilisé. Ainsi, pour l'amidon, la perméabilité est comprise dans un intervalle entre 10 et 10000 l/m².h, préférentiellement dans un intervalle entre 50 et 2000 l/m².h, idéalement dans un intervalle compris entre 100 et 500 l/m².h.

Pour la dextrine utilisée comme matière d'enrobage, la perméabilité est comprise dans un intervalle entre 10 et 25000 l/m².h, préférentiellement dans un intervalle entre 100 et 5000 l/m².h, idéalement dans un intervalle compris entre 200 et 1500 l/m².h.

Dans le cas d'une utilisation de la colophane comme matière d'enrobage, cette perméabilité est comprise dans un intervalle entre 10 et 3000 l/m².h, préférentiellement dans un intervalle entre 20 et 600 l/m².h, idéalement dans un intervalle compris entre 50 et 150 l/m².h.

Il convient de noter que ces différentes valeurs de perméabilité sont mesurées au travers d'une épaisseur de composé d'enrobage de 5 cm sans qu'une pression ne soit exercée sur l'eau lors de la mesure de la perméabilité.

L'enrobage du minéral microporeux 2 par un film perméable 9 peut être total, c'est-à-dire sur l'ensemble de la surface du minéral microporeux 2 ou simplement partiel, c'est-à-dire uniquement sur une partie de la surface du minéral 2. Préférentiellement, l'enrobage est opéré sur l'ensemble de la surface du minéral 2 pour participer de façon optimisée au ralentissement du phénomène de désorption d'eau, voire de sel 3.

Le mélange du sel 3 avec le minéral microporeux 2 fait intervenir préférentiellement un solvant, par exemple de l'eau, pour permettre cette intégration du sel 3 sur et dans le minéral 2. Dans un premier temps, le solvant permet une dissolution du sel 3 pour l'obtention d'une solution saline. Cette solution saline est alors adsorbée et/ou absorbée par le minéral microporeux 2. L'eau adsorbée et/ou absorbée est alors éliminée du minéral microporeux 2. Cette élimination peut être opérée en accélérant la libération de l'eau adsorbée et/ou absorbée par le minéral microporeux 2 par séchage avec une augmentation de la température ambiante et/ou une ventilation de l'atmosphère.

Le minéral microporeux 2 de l'invention peut être utilisé au niveau de surfaces présentant une épaisseur, tel que par exemple et de façon non limitative, des pelouses ou des gazons, naturels ou artificiels. L'épaisseur est alors réalisée entre, d'une part, la base 5 qui réalise une structure sur laquelle est montée fixée au moins un faisceau 4 de fibres orienté selon une direction sensiblement perpendiculaire au plan de la base 5 et, d'autre part, l'extrémité des faisceaux 4 de fibres. Le minéral microporeux de l'invention disposé sur cette surface se trouve positionné au niveau de la base 5 de la surface, retenant par adsorption et/ou absorption l'humidité à ce niveau. Le minéral microporeux 2 chargé ioniquement empêche ainsi à l'humidité de remonter au niveau de l'extrémité des faisceaux 4 de fibres pour y former une couche de gel glissante.

Le procédé de production d'une composition 1 selon l'invention pourrait être résumé en ce qu'il comprend le mélange d'un minéral microporeux 2 et d'un sel 3 avec :
- une étape d'ajout d'une quantité déterminée de solvant,
- une étape de dilution du sel dans le solvant pour l'obtention d'une solution saline,
- une étape d'adsorption et/ou d'absorption de la solution saline par le minéral microporeux 2,
- une étape d'élimination du solvant adsorbé et/ou absorbé laissant le minéral microporeux 2 chargé en sel 3,
- une étape d'enrobage au moins partiellement du minéral microporeux 2 chargé en sel par un film perméable 6.

L'intégration du sel 3 dans le minéral microporeux 2 peut être effectuée avec au moins 2 ml de solvant, tel que de l'eau, pour 37 grammes de mélange sel 3 et minéral microporeux 2. Selon le mode de réalisation du procédé, la quantité de solvant peut être modulée pour être adaptée aux conditions d'évaporation de celui-ci. En effet, plus la quantité de solvant est importante et plus le temps nécessaire à l'étape d'élimination sera long.

Un exemple non-limitatif de réalisation de la composition 1 de l'invention consiste à mélanger, en proportion équivalente, 0,8 gramme de sel 3 NaCl avec 3 grammes de minéral microporeux 2. Selon un exemple de réalisation de l'invention, pour les proportions, l'intégration du sel 3 dans le minéral 2 est effectuée avec 4 ml de solvant tel que de l'eau.

Dans le cadre de l'utilisation de sel 3 de soude, d'acide formique ou d'acide dicarboxiliques, ce sel représente jusqu'à 50% du poids total du minéral microporeux 2, préférentiellement de 2% à 30% du poids total du minéral 2 et idéalement de 5% à 20% du poids total du minéral 2.

Lorsque le minéral microporeux 2 intégrant du sel 3 de l'invention présente une perte d'efficacité, par exemple après une utilisation ayant éliminée le sel 3 intégré dans les pores du minéral 2, ce minéral 2 peut être rechargé ou régénéré par épandage de sel 3 ou de saumure, par exemple NaCl, sur la surface où est disposée le minéral microporeux 2. En présence d'humidité, le sel 3 épandu se solubilise et le minéral microporeux 2 intègre le sel 3 par adsorption et/ou absorption de la solution saline.

Selon une particularité de réalisation, la composition en sel 2 et minéral microporeux 3 de l'invention est caractérisée en ce qu'elle comprend également un mélange de granulats élastiques. De tels granulats sont classiquement utilisés pour des terrains tels que les gazons artificiels et assurent une amélioration de la capacité d'amortissement du terrain lorsqu'un pratiquant chute sur celui-ci.

Selon une particularité de réalisation, ce mélange de granulats élastiques est réalisé par au moins un composé d'une liste comprenant notamment au moins un élastomère thermoplastique, un caoutchouc, un résidu de liège, un résidu de noix de coco.

Selon une spécificité de cette particularité de réalisation, le caoutchouc peut être composé de SBR (styrène-butadiène rubber) ou de EPDM (caoutchouc d'éthylène-propylène-diène / copolymère des éthylène-propylène-diène monomères).

Selon une alternative de réalisation, la composition 1 pour surface extérieure destinée à réguler la présence d'eau sur cette surface est caractérisée en ce que cette composition 1 comprend au moins un mélange d'une zéolithe 2 et d'un sel 3 pour permettre un effet d'adsorption et/ou de désorption, cette composition 1 comprenant également un mélange de granulats élastiques.

Selon exemple de réalisation de l'invention, la composition 1 pour surface extérieure comprend une quantité d'élément d'enrobage comprise entre 0,1% et 60% de la masse de zéolithe 2 et une quantité de sel comprise entre 0,05% et 80% de la masse de zéolithe 2, préférentiellement une quantité d'élément d'enrobage comprise entre 1% et 30% de la masse de zéolithe 2 et une quantité de sel comprise entre 1% et 20% de la masse de zéolithe 2, et idéalement une quantité d'élément d'enrobage comprise entre 7% et 10% de la masse de zéolithe 2 et une quantité de sel comprise entre 10% et 15% de la masse de zéolithe 2.

L'invention porte également sur l'utilisation de la composition de l'invention sur des surfaces extérieures. Bien que la composition utilisée soit identique, cette utilisation peut différer selon le type de surface considérer, gazon naturel, pelouse artificielle, terrain de terre battue, carrière hippique, etc. Dans sa mise en oeuvre pour une surface extérieure de terre battue, l'utilisation de la composition 1 est caractérisée en ce que la composition 1 est intégrée dans la sous-couche calcaire de la surface de terre battue. Cette couche calcaire est classiquement disposée sous le revêtement en terre rouge.

Dans la mise en oeuvre pour une surface extérieure telle qu'une carrière hippique, la composition 1 est épandue ou dispersée de façon homogène dans la couche de sable répartie sur la carrière.

Dans une mise en oeuvre pour une surface extérieure telle qu'une pelouse artificielle, la composition est épandue entre les faisceaux 4 de fibres de la pelouse. Selon une particularité de réalisation, cet épandage est effectué suite à une opération de redressement des fibres pour faciliter la pénétration de la composition 1 entre les faisceaux 4 de fibres. De plus, une fois la composition 1 épandue, les fibres sont à nouveau brossées pour compléter l'homogénéisation de la composition 1 entre les faisceaux 4 de fibres de la pelouse. Ce procédé d'utilisation présente l'avantage de permettre une répartition de la composition sur des pelouses artificielles déjà existantes et installés.

Dans le cadre de l'installation d'une nouvelle pelouse artificielle sur une surface extérieure, la composition 1 selon l'invention est disposée directement entre les faisceaux 4 de fibres de la pelouse artificielle, les faisceaux 4 de fibres étant orientés selon une direction sensiblement perpendiculaire au plan de la base 5 réalisant une structure de fixation de la pelouse artificielle. La base 5 de la pelouse peut éventuellement être adaptée pour positionner sous sa structure un système de drainage 6, 6bis permettant une évacuation de liquide au travers de cette base 5. Alternativement, selon une autre particularité de réalisation susceptible d'être combinée avec la réalisation précédente, la composition 1 selon l'invention est intégrée dans la base 5 de la pelouse artificielle. Ce mode de réalisation présente l'avantage d'effectuer une installation simultanée de la pelouse artificielle et de la composition de l'invention optimisant la résistance de cette pelouse.

Selon une autre particularité de réalisation, susceptible d'être combinée avec la particularité précédente, la composition 1 selon l'invention est intégrée dans la base 5 de la pelouse artificielle au niveau de la couche de lestage 7. Ce mode de réalisation présente l'avantage d'effectuer une installation simultanée de la pelouse artificielle et de la composition 1 de l'invention optimisant la résistance de cette pelouse. La base 5 de la pelouse peut également intégrer une couche de remplissage 8 qui se superpose à la couche de lestage 7.

Selon une particularité de réalisation, la composition 1 de l'invention remplace le sable classiquement utilisé au niveau de la couche de lestage 7 des pelouses artificielles.

Sur un terrain dans lequel une composition 1 de l'invention est intégrée, la dispersion de la composition 1 est comprise entre 10000 grammes/m² et 30000 grammes/m². Cette composition 1 peut alors représenter jusqu'à 100% de la couche de lestage 7.

Dans le cadre d'un épandage sur une surface existante, la dispersion d'une composition 1 de l'invention est alors comprise entre 5000 grammes/m² et 25000 grammes/m², préférentiellement entre 9000 grammes/m² et 15000 grammes/m², et idéalement comprise entre 30% et 70% de la masse totale de la composition 1.

L'invention porte également sur une composition complémentaire pour renouveler l'adsorption de sel 3 par la zéolithe 2 d'une composition 1 pour surface extérieure selon l'invention, caractérisée en ce que cette composition complémentaire comprend une quantité d'élément d'enrobage d'au plus 90% de la masse totale de la composition complémentaire et une quantité de sel d'au plus 90% de la masse totale de la composition complémentaire, préférentiellement une quantité d'élément d'enrobage 9 comprise entre 10% et 50% de la masse totale de la composition complémentaire et une quantité de sel 3 comprise entre 10% et 50% de la masse totale de la composition complémentaire et une quantité de zéolithe 2 comprise entre 2% et 20% de la masse totale de la composition complémentaire, et idéalement une quantité d'élément d'enrobage 9 comprise entre 40 et 50% de la masse totale de la composition complémentaire et une quantité de sel 3 comprise entre 20% et 30% de la masse totale de la composition complémentaire et une quantité de zéolithe 2 comprise entre 10% et 20% de la masse totale de la composition complémentaire.

Selon une particularité de cette composition complémentaire pour renouveler l'adsorption de sel 3, la zéolithe 2 utilisé présente une granulométrie située dans un intervalle compris entre 5 et 100 microns, idéalement inférieure à 50 microns.

## Revendications

1. Composition (1) épandable pour surface extérieure destinée à réguler la présence d'eau sur cette surface par adsorption et désorption de l'eau, **caractérisée en ce que** cette composition (1) comprend un mélange de granulés d'un minéral microporeux formé par une zéolithe (2) et d'un sel (3) formé par un ou plusieurs cations inorganiques issus du groupe des métaux alcalins ou des métaux alcalino-terreux et/ou par un ou plusieurs anions inorganiques issus d'un groupe comprenant des hydroxydes, des chlorures et des sulfates et/ou formé par un ou de plusieurs groupes organiques comprenant des acides dicarboxiliques, des acides formiques et des acides acétiques pour permettre un effet d'adsorption et/ou de désorption, cette composition (1) comprenant un enrobage au moins partiel par un film perméable (9) de la zéolithe (2), ce film perméable (9) étant réalisé par de l'amidon, de la dextrine ou de la colophane, et **en ce que** la zéolithe (2) présente une granulométrie comprise entre 0,5 et 1,5 mm, et **en ce que** le film perméable (9) d'enrobage a une épaisseur d'au plus 500 microns.

2. Composition (1) pour surface extérieure selon la revendication 1, **caractérisée en ce que** la composition (1) comprend également un mélange de granulats élastiques.

3. Composition (1) pour surface extérieure selon une des revendications précédentes, **caractérisée en ce que** l'enrobage du minéral microporeux est opéré par un film (9) dont la perméabilité est comprise entre 10 et 25000 l/m².h pour une épaisseur de film de 5cm.

4. Composition (1) pour surface extérieure selon une des revendications 2 et 3, **caractérisée en ce qu'**au moins un granulat élastique est réalisé par au moins un composé d'une liste comprenant notamment un élastomère thermoplastique ou un caoutchouc.

5. Composition (1) pour surface extérieure selon une des revendications 1 à 4, **caractérisée en ce que** la quantité de sel (3) est comprise entre 10 % et 70 % de la masse totale de la composition (1).

6. Composition (1) pour surface extérieure selon une des revendications 1 à 4, **caractérisée en ce que** la quantité de minéral microporeux (2) correspond à 50 % de la masse totale de la composition (1).

7. Utilisation d'une composition (1) pour surface extérieure selon une des revendications 1 à 6, **caractérisée en ce que** la composition est intégrée dans la sous-couche calcaire d'une surface de terre battue.

8. Utilisation d'une composition (1) pour surface extérieure selon une des revendications 1 à 6, **caractérisée en ce que** la composition est épandue entre les faisceaux (4) de fibres d'une pelouse artificielle.

9. Mélange de granules pour surface extérieure selon une des revendications 1 à 6 avec une composition complémentaire qui comprend une quantité d'élément d'enrobage d'au plus 90% de la masse totale de la composition complémentaire et une quantité de sel d'au plus 90% de la masse totale de la composition complémentaire pour renouveler l'adsorption de sel (3) par le minéral microporeux (2) de la composition (1) pour surface extérieure.

10. Mélange selon la revendication 9, **caractérisé en ce que** la composition complémentaire comprend également un minéral microporeux (2) d'au plus 20% de la masse totale de la composition complémentaire.

11. Mélange selon la revendication 10, **caractérisé en ce que** la composition complémentaire comprend également un minéral microporeux (2) dont la granulométrie est située dans un intervalle compris entre 5 et 100 microns.

12. Procédé de production d'une composition (1) selon une des revendications 1 à 6, **caractérisé en ce que** le procédé comprend le mélange d'un minéral microporeux (2) et d'un sel (3) avec au moins :
- une étape d'ajout d'une quantité déterminée de solvant,
- une étape de dilution du sel dans le solvant pour l'obtention d'une solution saline,
- une étape d'adsorption et/ou d'absorption de la solution saline par le minéral microporeux (2),
- une étape d'élimination du solvant adsorbé et/ou absorbé laissant le minéral microporeux (2) chargé en sel (3),
- une étape d'enrobage au moins partiellement du minéral microporeux (2) chargé en sel par un film perméable (9).

## Patentansprüche

1. Ausbreitbare Zusammensetzung (1) für eine Außenfläche, die dazu bestimmt ist, das Vorhandensein von Wasser auf dieser Fläche durch Adsorption und Desorption des Wassers zu regulieren, **dadurch gekennzeichnet, dass** diese Zusammensetzung (1) ein Granulatgemisch aus eine mikroporösen Mineral, das von einem Zeolith (2) gebildet ist, und einem Salz (3) umfasst, das von einem oder mehreren anorganischen Kationen, die aus der Gruppe der alkalischen Metalle oder der erdalkalischen Metalle stammen, und/oder von einem oder mehreren anorganischen Anionen gebildet ist, die aus einer Gruppe stammen, umfassend Hydroxide, Chloride und Sulfate, und/oder die von einer oder mehreren organischen Gruppen gebildet ist, umfassend Dicarboxylsäuren, Ameisensäuren und Essigsäuren, um eine Adsorptions- und/oder Desorptionswirkung zu ermöglichen, wobei diese Zusammensetzung (1) eine zumindest teilweise Umhüllung mit einer durchlässigen Folie (9) des Zeoliths (2) umfasst, wobei diese durchlässige Folie (9) mit Stärke, Dextrin oder Kolophonium hergestellt ist, und dass das Zeolith (2) eine Granulometrie zwischen 0,5 und 1,5 mm aufweist, und dass die durchlässige Umhüllungsfolie (9) eine Dicke von höchstens 500 Mikrometern hat.

2. Zusammensetzung (1) für eine Außenfläche nach Anspruch 1, **dadurch gekennzeichnet, dass** die Zusammensetzung (1) auch ein Gemisch von elastischem Granulat umfasst.

3. Zusammensetzung (1) für eine Außenfläche nach einem der vorhergehenden Ansprüche, **dadurch gekennzeichnet, dass** die Umhüllung des mikroporösen Minerals durch eine Folie (9) verwirklicht ist, deren Durchlässigkeit zwischen 10 und 25000 l/m².h bei einer Foliendicke von 5 cm beträgt.

4. Zusammensetzung (1) für eine Außenfläche nach einem der Ansprüche 2 und 3, **dadurch gekennzeichnet, dass** mindestens ein elastisches Granulat durch mindestens eine Verbindung aus einer Liste, umfassend insbesondere ein thermoplastisches Elastomer oder Kautschuk, verwirklicht ist.

5. Zusammensetzung (1) für eine Außenfläche nach einem der Ansprüche 1 bis 4, **dadurch gekennzeichnet, dass** die Salzmenge (3) zwischen 10 % und 70 % der Gesamtmasse der Zusammensetzung (1) ausmacht.

6. Zusammensetzung (1) für eine Außenfläche nach einem der Ansprüche 1 bis 4, **dadurch gekennzeichnet, dass** die Menge an mikroporösem Mineral (2) 50 % der Gesamtmasse der Zusammensetzung (1) entspricht.

7. Verwendung einer Zusammensetzung (1) für eine Außenfläche nach einem der Ansprüche 1 bis 6, **dadurch gekennzeichnet, dass** die Zusammensetzung in die kalkige Unterschicht einer sandigen Oberfläche integriert ist.

8. Verwendung einer Zusammensetzung (1) für eine Außenfläche nach einem der Ansprüche 1 bis 6, **dadurch gekennzeichnet, dass** die Zusammensetzung zwischen den Faserbündeln (4) eines Kunstrasens ausgebreitet ist.

9. Granulatgemisch für eine Außenfläche nach einem der Ansprüche 1 bis 6 mit einer komplementären Zusammensetzung, die eine Menge eines Umhüllungselements von höchstens 90 % der Gesamtmasse der komplementären Zusammensetzung und eine Salzmenge von höchstens 90 % der Gesamtmasse der komplementären Zusammensetzung umfasst, um die Salzadsorption (3) durch das mikroporöse Mineral (2) der Zusammensetzung (1) für eine Außenfläche zu erneuern.

10. Gemisch nach Anspruch 9, **dadurch gekennzeichnet, dass** die komplementäre Zusammensetzung auch ein mikroporöses Mineral (2) von höchstens 20 % der Gesamtmasse der komplementären Zusammensetzung umfasst.

11. Gemisch nach Anspruch 10, **dadurch gekennzeichnet, dass** die komplementäre Zusammensetzung auch ein mikroporöses Mineral (2) umfasst, dessen Granulometrie in einem Bereich zwischen 5 und 100 Mikrometern liegt.

12. Verfahren zur Herstellung einer Zusammensetzung (1) nach einem der Ansprüche 1 bis 6, **dadurch gekennzeichnet, dass** das Verfahren das Mischen eines mikroporösen Minerals (2) und eines Salzes (3) umfasst, mit mindestens:
- einem Schritt der Hinzufügung einer bestimmten Menge an Lösungsmittel;
- einem Schritt der Verdünnung des Salzes in dem Lösungsmittel, um eine Salzlösung zu erhalten;
- einem Schritt der Adsorption und/oder Absorption der Salzlösung durch das mikroporöse Mineral (2),
- einem Schritt der Beseitigung des adsorbierten und/oder absorbierten Lösungsmittels, wobei das mikroporöse Mineral (2) mit Salz (3) beaufschlagt bleibt,
- einem Schritt der zumindest teilweisen Umhüllung des mit Salz beaufschlagten mikroporösen Minerals (2) mit einer durchlässigen Folie (9).

## Claims

1. Spreadable composition (1) for an external surface intended to regulate the presence of water on said surface by the adsorption or desorption of water, **characterised in that** said composition (1) comprises a mixture of a granules of a microporous mineral formed by a zeolite (2) and a salt (3) formed by one or more inorganic cations derived from the group of alkali metals or alkaline earth metals and/or by one or more inorganic anions derived from a group comprising hydroxides, chlorides and sulphates and/or formed by one or more organic groups comprising dicarboxylic acids, formic acids and acetic acids to enable an adsorption effect and/or desorption effect, said composition (1) comprising coating at least partially with a permeable film (9) of zeolite (2), said permeable film (9) being formed by starch, dextrin or rosin, and **in that** the zeolite (2) has a grain size between 0.5 and 1.5 mm and **in that** the permeable coating film (9) has a thickness of at most 500 microns.

2. Composition (1) for an external surface according to claim 1, **characterised in that** the composition (1) also comprises a mixture of elastic granulates.

3. Composition (1) for an external surface according to any of the preceding claims, **characterised in that** the microporous mineral coating is formed by a film (9), the permeability of which is between 10 and 25000 l/m².h for a film thickness of 5 cm.

4. Composition (1) for an external surface according to any of claims 2 and 3, **characterised in that** at least one elastic granulate is formed by at least one compound from a list including in particular a thermoplastic elastomer or a rubber.

5. Composition (1) for an external surface according to any of claims 1 to 4, **characterised in that** the quantity of salt (3) is between 10 % and 70 % of the total mass of the composition (1).

6. Composition (1) for an external surface according to any of claims 1 to 4, **characterised in that** the quantity of microporous mineral (2) corresponds to 50 % of the total mass of the composition (1).

7. Use of a composition (1) for an external surface according to any of claims 1 to 6, **characterised in that** the composition is integrated into the chalky sub-layer of a compacted ground surface.

8. Use of a composition (1) for an external surface according to any of claims 1 to 6, **characterised in that** the composition is spread between the fibre bundles (4) of an artificial lawn.

9. Mixture of granules for an external surface according to any of claims 1 to 6 with a complementary composition which comprises a quantity of coating element of at most 90 % of the total mass of the complementary composition and a quantity of salt of at most 90 % of the total mass of the complementary composition for renewing the adsorption of salt (3) by the microporous mineral (2) of the composition (1) for the external surface.

10. Mixture according to claim 9, **characterised in that** the complementary composition also comprises a microporous mineral (2) of at most 20 % of the total mass of the complementary composition.

11. Mixture according to claim 10, **characterised in that** the complementary composition also comprises a microporous mineral (2) the grain size of which is within a range of between 5 and 100 microns.

12. Method of producing a composition (1) according to any of claims 1 to 6, **characterised in that** the method comprises mixing a microporous mineral (2) and a salt (3) with at least:
- a step of adding a specified quantity of solvent,
- a step of diluting the salt in the solvent to obtain a saline solution,
- a step of adsorption and/or absorption of the saline solution by the microporous mineral (2),
- a step of eliminating the adsorbed and/or absorbed solvent, leaving the microporous mineral (2) charged with salt (3),
- a step of coating at least partially the microporous mineral (2) charged with salt with a permeable film (9).
